# EUROPEAN PATENT SPECIFICATION

(11) **EP 1 015 295 B1**
(45) Date of publication and mention of the grant of the patent: **09.04.2003**
(21) Application number: 98944407.0
(22) Date of filing: 16.09.1998
(51) Int. Cl.: B62D 29/04, B62D 25/06, B62D 65/00

(54) **METHOD FOR MOUNTING SELF-SUPPORTING VEHICLE ROOFS**
VERFAHREN ZUM MONTIEREN VON SELBSTTRAGENDEN FAHRZEUGDÄCHER
PROCEDE POUR LE MONTAGE DE TOITS DE VEHICULE AUTOPORTEURS

(30) Priority: 17.09.1997 SE 9703341
(43) Date of publication of application: 05.07.2000
(73) Proprietor: Volvo Car Corporation, 405 31 Göteborg (SE)
(72) Inventor: PERSSON, Arne, S-290 60 Kyrkhult (SE); NYLINDER, Ake, S-436 56 Hovas (SE)
(74) Representative: Hammond, Andrew David
(86) International application number: SE9801656
(87) International publication number: WO99016659

(56) References cited:
- EP-A1- 0 250 678
- DE-A1- 2 929 689
- GB-A- 2 115 753
- GB-A- 2 211 798
- US-A- 4 978 164

## Description

### Technical field

The present invention relates to a method for mounting a self-supporting vehicle roof on a body of a motor vehicle, as discribed in the preamble of claim 1.

The mounting method utilizes a special, self-supporting roof construction of so-called sandwich type, which enables a complete roof, comprising both inner and outer roof, to be mounted as one of the last components in an assembly line for motor vehicles. After having been mounted, vehicle roofs of the type utilized in the mounting method according to the present invention will constitute an integrated, load-bearing part of a vehicle body.

### Background of the invention

Detachable and remountable roofs of for example plastic material, so-called hard-top roofs, are previously known. Such roofs can be mounted in a finished condition as one of the last components in an assembly line for motor vehicles, but are not intended to constitute a load-bearing part of the body of a motor vehicle to any great extent. Accordingly, in order to compensate for this, the body and/or the chassis of vehicles of this type has/have to be provided with additional reinforcements.

Furthermore, so-called folding tops, i.e. upwardly and downwardly foldable vehicle roofs of different textile and/or plastic materials for use in for example convertible cars, are previously known.

Where folding tops are concerned, it is conceivable to mount a folding top in a finished condition comparatively late along the assembly line. A folding top, however, does not constitute a load-bearing component in the body of the vehicle. Therefore, convertible cars also have to be provided with additional reinforcements in a similar way as when vehicles having hard-top roofs are concerned.

In conventional motor vehicles, the most common roof type is sheet-metal roofs which comprise an outer roof of sheet-metal and a post-mounted inner roof, providing insulation and decoration. This type of conventional vehicle roof constitutes an integrated, load-bearing part of the body of a motor vehicle.

When manufacturing the outer roof portion of such conventional, self-supporting vehicle roofs of sheet-metal, different metal working operations are usually used, such as pressing, rolling and welding. When the outer roof portion has been mounted onto the vehicle body or has been moulded together therewith, the outer roof is provided in one or several steps with possible insulating and decorative layers on the side which is to constitute the inner roof facing towards the passenger compartment. The mounting of the separate inner roof normally takes place as one of the last steps in an assembly line for motor vehicles.

Vehicle roofs of different plastic composites or laminates are also known. After having been mounted, such previously known vehicle roofs can certainly constitute an integrated, load-bearing part of the body of a motor vehicle. In a similar way as when sheet-metal roofs are concerned, the previously known vehicle roofs of composite or laminate type, however, require that a separate inner roof is mounted at the end of the assembly line.

Because of the limited working space, post-mounting of a separate inner roof can be perceived as relatively difficult and ergonomically uncomfortable, and also consumes important assembly time.

There is also a certain risk that interior components, which have been mounted earlier in the assembly line, are damaged or soiled during the subsequent mounting of the inner roof.

EP 0 250 678 comprises the features mentioned in the preamble of claim 1 of the present application.

### Summary of the invention

Accordingly, an object of the present invention is to provide an ergonomically advantageous and simple method for mounting a self-supporting vehicle roof, which is complete with outer and inner roof, and which is intended to constitute an integrated, load-bearing part of the body of a motor vehicle after having been mounted.

The object of the invention is achieved by means of the self-supporting vehicle roof as described in claim 1.

### Brief description of the drawings

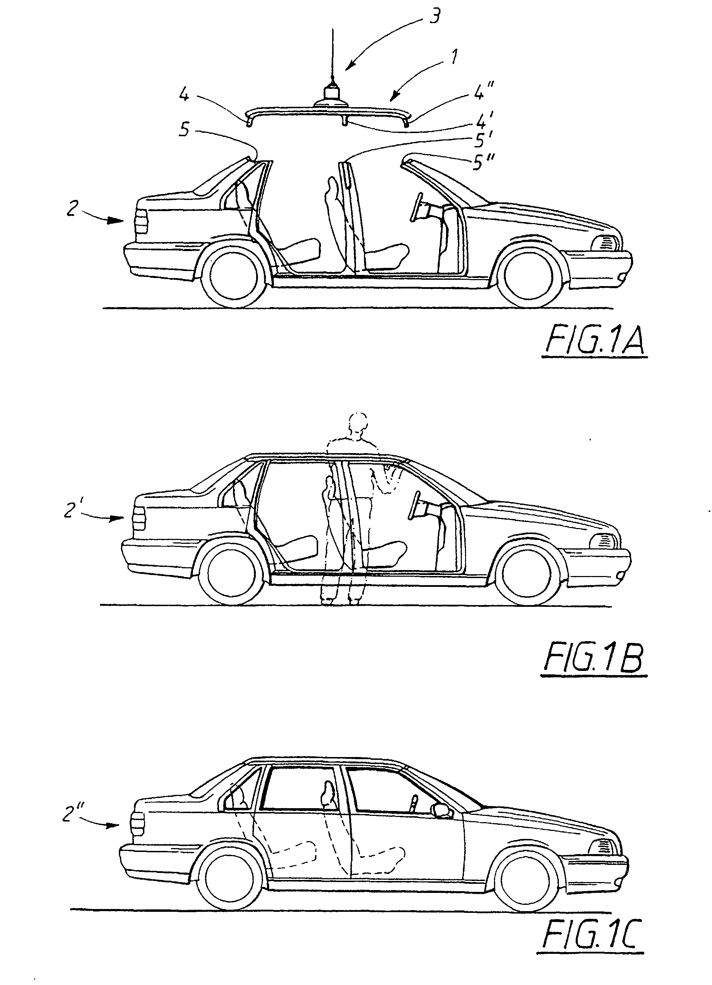

In the following, the invention will be described in greater detail with reference to the attached drawings, in which
- Fig. 1A: schematically shows a motor vehicle, the body of which is roof-less, and a self-supporting vehicle roof being lowered towards the vehicle body in order to be mounted,
- Fig. 1B: schematically shows the motor vehicle in Fig. 1A during mounting and fixation of the lowered vehicle roof, and
- Fig. 1C: schematically shows a completely assembled motor vehicle onto which a self-supporting vehicle roof has been mounted by means of the method according to the invention.

### Detailed description of preferred embodiments

In the attached Fig. 1A, a vehicle roof is shown while being lowered in a direction towards a vehicle body of an almost completely assembled motor vehicle. Thereby, the vehicle roof utilized in the method according to the invention is a complete, self-supporting vehicle roof, with both outer and inner roof, and intended to constitute an integrated, load-bearing part of the structure after having been mounted.

In the following, a suitable material structure for the vehicle roof which is utilized in the method according to the invention will be proposed.

Such a suitable material structure comprises a material structure of so-called sandwich type, which provides sufficient stiffness and strength in order to be able to constitute an integrated, load-bearing component of the body of the motor vehicle after having been mounted.

From the outside and inwards when the vehicle roof is mounted onto a motor vehicle, a suitable material structure of a vehicle roof for use in the method according to the invention comprises an outer cover layer, a core, an inner cover layer, an insulating layer and a decorative layer.

The outer cover layer provides an attractive (uniform and lustry) surface finish on the side which is facing outwards (upwards in Fig. 1A), because the outer cover layer after mounting will be facing towards the exterior side of the vehicle and has to provide a visually attractive and protective surface, which also must be possible to paint or varnish with good results when this is desirable or necessary. The outer cover layer can, for example, consist of so-called laminate sheet with two external layers of 0.2 mm aluminium foil enclosing an intermediate layer of 0.8 mm polypropylene film.

The main task of the core is to provide high bearing resistance and low weight per unit volume, i.e. low density. Furthermore, the core contributes to the sound and heat insulating ability of the vehicle roof. The core can, for example, consist of a 10 mm thick layer of polymetachrylimide foam, which is attached to the above-mentioned outer cover layer with for example epoxy-glue of two-component type.

The main function of the inner cover layer, situated inside the core, is to provide high strength. The inner cover layer, together with the above-mentioned outer cover layer and the core should, namely, provide the above-mentioned sandwich structure with high stiffness and low weight, in order to give the vehicle roof according to the invention suitable properties for the application. The inner cover layer can, for example, consist of a glass-fibre reinforced polypropylene plastic sheet with 0.6 mm thickness and can, for example, be attached to the core by means of thermal bonds originating from the thermoplastic polypropylene.

Conjointly, the insulating and the decorative layers constitute a unit which in function can be said to correspond to a conventional inner roof of a vehicle. The insulating layer provides sound and heat insulating properties and a certain softness, whereas the primary task of the decorative layer is to provide a decorative interior surface, intended to be visible from within the passenger compartment.

The insulating layer can, for example, consist of a polyether foam layer with open cells and approximately 4.0 mm layer thickness, while the decorative layer for example can be constituted of a knitted polyester textile.

Such a material structure, suitable for use in a vehicle roof which is to be utilized in a method according to the invention, can be manufactured by means of laminating and heat pressing or moulding methods known per se.

According to a particularly preferred embodiment of the invention, the above-mentioned outer cover layer provides exterior surfaces with a sufficient surface finish, already when the self-supporting vehicle roof is mounted, in order to require only a light polishing operation before the motor vehicle is transported from the assembly operation and proceeds further to sales. Such a polishing operation can be performed with suitable previously known techniques for the purpose in connection with other exterior body parts being polished.

As mentioned above, the vehicle roof for use in the method according to the invention can also be surface finished, painted or varnished with suitable previously known techniques, when this is necessary and desirable.

Furthermore, the vehicle roof which is to be utilized in the method according to the invention is provided with a number of first mounting points according to previously known technique.

These first mounting points 4, 4', 4" are schematically depicted in the attached Fig. 1A and are intended to be joined to a corresponding number of second mounting points 5, 5', 5" on the remaining portion of a roof-less vehicle body of a motor vehicle which is being assembled.

The first mounting points 4, 4', 4" can, for example, be constituted of reinforcements or protruding tabs for screw or bolt joints inserted into the plastic material, or of surfaces which are prepared for gluing. The corresponding second mounting points 5, 5', 5" of the vehicle body, situated in the roof pillars, can be of the same type as in the first mounting points 4, 4', 4" of the vehicle roof, or of another suitable type according to previously known technique.

Accordingly, in the method according to the invention, a self-supporting vehicle roof of the type previously described herein is placed onto the body of a motor vehicle 2 missing a vehicle roof. In the described embodiment, this is done in the way shown in Fig. 1A, with the aid of lifting gear according to previously known technique.

When the vehicle roof 1 has been placed in the correct position on the vehicle body, so that the positions of the above-mentioned first 4, 4', 4" and second mounting points 5, 5', 5" correspond to each other in pairs, said number of first and second mounting points are fixated to each other so that stable joints are created. As is evident from above, this can for example be done by means of bolt or screw joints which join first mounting points of the vehicle roof to corresponding second mounting points of the remaining body.

Where glue joints are concerned, a glue which is suitable for the purpose has of course to be applied on all first and/or second mounting points before the vehicle roof is placed in its final position. The glue can be of any suitable previously known type, as is also the case with the application method.

It is also conceivable to use other types of mounting points or joints than those mentioned herein, as long as joints with a sufficiently high strength and permanence can be obtained between the vehicle roof and the remaining vehicle body. Examples of such alternative joining techniques are welding, plastic application and thermoplastic joints. In this respect, thermoplastic joints refers to all types of joints comprising a thermoplastic layer or material, by means of being heated above the softening temperature, that is brought into an adhesive state in order to create a joint after cooling in which the cohesive force is thermal bonds.

When the fitter, schematically depicted in Fig. 1B, has finalized the joining of first 4, 4', 4" and second mounting points 5, 5', 5" together in pairs, an almost completely assembled vehicle body with a self-supporting vehicle roof complete with outer and inner roof is obtained.

The mounted, self-supporting vehicle roof constitutes an integrated, load-bearing part of the body of a completely assembled motor vehicle 2".

The method according to the invention provides an ergonomically advantageous and simple method for mounting a load-bearing vehicle roof onto a motor vehicle and, furthermore, enables the majority of all interior components to be finally mounted in the vehicle before the mounting of the self-supporting vehicle roof takes place. This also provides advantages with improved ergonomics and space in the assembly steps which precede the mounting of the vehicle roof.

The present invention is by no means limited to what has been described in connection with the preferred embodiments or to what is shown in the attached drawings, and the scope of the invention is defined by the appended claims.

Accordingly, it is conceivable with embodiments of the method according to the invention wherein one or several steps are automated in order to be performed semi-automatically or automatically, using for example a robotic device.

Furthermore, a number of different material structures are conceivable in the vehicle roof utilized in the method, as long as the vehicle roof can fulfil the demands on for example load-bearing ability and low weight which is required by the application, and as long as the vehicle roof is provided in a complete form with outer roof and inner roof before being mounted.

## Claims

1. A method for mounting a self-supporting vehicle roof,
wherein said self-supporting vehicle roof (1) comprises a number of first mounting points (4, 4', 4"), while a roof-less vehicle body comprises a number of second mounting points (5, 5', 5"), and said first (4, 4', 4") and second mounting points (5, 5', 5") are joined together in pairs in order to create stable joints and thereby to provide a vehicle body of a motor vehicle (2') in which said self-supporting vehicle roof (1) constitutes an integrated, load-bearing part, and the self-supporting vehicle roof (1) is provided in a complete form having an outer roof and an inner roof before mounting onto the roof-less vehicle body of the motor vehicle (2) starts, wherein an insulating layer and a decorative layer correspond to said inner roof, **characterized in that** the roof-less vehicle body, before mounting of the self-supporting vehicle roof, comprises roof pillars in which the second mounting points (5, 5', 5") are situated.

2. A mounting method according to claim 1,
**characterized in that** the self-supporting vehicle roof (1) is mounted onto the vehicle body in the final section of an assembly line for motor vehicles when the majority of the interior components of the motor vehicle already have been mounted.

3. A mounting method according to claim 1 or 2,
**characterized in that** the first (4, 4', 4") and second (5, 5', 5") mounting points are joined together in pairs by means of any one or a combination of several of the following methods; gluing, welding, screwing, bolt joining, plastic application and thermoplastic joining.

4. A mounting method according to any one of the preceding claims,
**characterized in that** the self-supporting vehicle roof (1) when being mounted comprises an outer cover layer, a core, an inner cover layer, said insulating layer and decorative layer, and that the inner cover layer together with the outer cover layer and the core thereby provide a sandwich structure with high stiffness and low weight, whereas the insulating layer provides sound and heat insulating properties and softness, and the decorative layer provides a decorative interior surface which is intended to be visible from within a passenger compartment of the motor vehicle (2, 2', 2").

5. A method according to any one of the preceding claims,
**characterized in that** the outer cover layer, when the self-supporting vehicle roof (1) is mounted, provides external surfaces of said vehicle roof (1) with a surface finish allowing the completely assembled motor vehicle (2") to proceed directly to sales after a conventional polishing operation.

## Patentansprüche

1. Verfahren zum Befestigen eines selbsttragenden Fahrzeugdaches, wobei das selbsttragende Fahrzeugdach (1) eine Anzahl erster Befestigungspunkte (4, 4', 4") umfasst und eine dachlose Karosserie eine Anzahl zweiter Befestigungspunkte (5, 5', 5") umfasst und die ersten (4, 4', 4") und zweiten Befestigungspunkte (5, 5', 5") paarweise miteinander verbunden werden, um stabile Verbindungen zu schaffen und dadurch eine Karosserie eines Kraftfahrzeuges (2') zu schaffen, bei der das selbsttragende Fahrzeugdach (1) einen integrierten, tragenden Teil bildet und das selbsttragende Fahrzeugdach (1) in vollständiger Form, mit einem äußeren Dach und einem inneren Dach, bereitgestellt wird, bevor die Befestigung auf der dachlosen Karosserie des Kraftfahrzeuges (2) beginnt, wobei eine Dämmschicht und eine dekorative Schicht dem inneren Dach entsprechen, **dadurch gekennzeichnet, dass** die dachlose Karosserie vor der Befestigung des selbsttragenden Fahrzeugdaches Dachsäulen umfasst, in denen die zweiten Befestigungspunkte (5, 5', 5") befindlich sind.

2. Befestigungsverfahren nach Anspruch 1, **dadurch gekennzeichnet, dass** das selbsttragende Fahrzeugdach (1) im Endabschnitt einer Fertigungsstraße für Kraftfahrzeuge auf der Karosserie befestigt wird, nachdem die Mehrzahl der Inneneinrichtungsteile des Kraftfahrzeuges bereits installiert wurde.

3. Befestigungsverfahren nach Anspruch 1 oder 2, **dadurch gekennzeichnet, dass** die ersten (4, 4', 4") und zweiten (5, 5', 5") Befestigungspunkte mit Hilfe eines oder einer Kombination mehrerer der folgenden Verfahren paarweise miteinander verbunden werden: Kleben, Schweißen, Schrauben, Verbinden mittels Bolzen, Kunststoffanwendung und thermoplastisches Verbinden.

4. Befestigungsverfahren nach einem der vorhergehenden Ansprüche, **dadurch gekennzeichnet, dass** das selbsttragende Fahrzeugdach (1) bei seiner Befestigung eine äußere Deckschicht, einen Kern, eine innere Deckschicht, die Dämmschicht und die dekorative Schicht umfasst und dass die innere Deckschicht zusammen mit der äußeren Deckschicht und dem Kern eine Sandwich-Struktur mit hoher Steifigkeit und geringem Gewicht liefert, während die Dämmschicht schall- und wärmedämmende Eigenschaften und Weichheit liefert und die dekorative Schicht eine dekorative innere Oberfläche liefert, die aus dem Inneren eines Fahrgastraumes des Kraftfahrzeuges (2, 2', 2") sichtbar sein soll.

5. Verfahren nach einem der vorhergehenden Ansprüche, **dadurch gekennzeichnet, dass** die äußere Deckschicht bei der Befestigung des selbsttragenden Fahrzeugdaches (1) äußere Oberflächen des Fahrzeugdaches (1) mit einem Oberflächen-Finish liefert, das es gestattet, das vollständig montierte Kraftfahrzeug (2") nach einem herkömmlichen Poliervorgang direkt zum Verkauf zu bringen.

## Revendications

1. Procédé de montage d'un toit autoporteur de véhicule,
dans lequel ledit toit autoporteur (1) de véhicule comprend plusieurs premiers points de montage (4, 4', 4") pendant qu'une carrosserie de véhicule sans toit comprend plusieurs seconds points de montage (5, 5', 5"), et lesdits premiers (4, 4', 4") et seconds (5, 5', 5") points de montage étant réunis entre eux par paires de manière à créer des joints stables et ainsi à offrir une carrosserie de véhicule d'un véhicule automobile (2') dans lequel ledit toit autoporteur (1) de véhicule constitue une partie porteuse intégrée, et le toit autoporteur (1) de véhicule est fourni sous une forme complète avec un toit extérieur et un toit intérieur avant de commencer le montage sur la carrosserie de véhicule sans toit du véhicule automobile (2), dans lequel une couche isolante et une couche décorative correspondent audit toit intérieur, ***caractérisé en ce que*** la carrosserie de véhicule sans toit, avant montage du toit autoporteur de véhicule, comprend des piliers de toit dans lesquels sont situés les seconds points de montage (5, 5', 5").

2. Procédé de montage selon la revendication 1,
***caractérisé en ce que*** le toit autoporteur (1) de véhicule est monté sur la carrosserie de véhicule dans la section finale d'une chaîne de montage de véhicules automobiles lorsque la majorité des composants intérieurs du véhicule automobile ont déjà été montés.

3. Procédé de montage selon la revendication 1 ou 2,
***caractérisé en ce que*** les premiers (4, 4', 4") et seconds (5, 5', 5") points de montage sont réunis entre eux par paires au moyen de l'une quelconque ou d'une combinaison de plusieurs des méthodes suivantes : collage, soudage, vissage, boulonnage, application de matière plastique et collage thermoplastique.

4. Procédé de montage selon l'une quelconque des revendications précédentes,
***caractérisé en ce que*** le toit autoporteur (1) de véhicule, lorsqu'on le monte, comprend une couche extérieure de couverture, un noyau central, une couche intérieure de couverture, lesdites couche isolante et couche décorative, et ***en ce que*** la couche intérieure de couverture associée à la couche extérieure de couverture et au noyau fournissent une structure sandwich de grande rigidité et de faible poids, pendant que la couche isolante fournit des propriétés d'isolation sonore et thermique et du moelleux, et que la couche décorative offre une surface intérieure décorative qui est destinée à être visible de l'intérieur d'un compartiment passagers du véhicule automobile (2, 2', 2").

5. Procédé selon l'une quelconque des revendications précédentes,
***caractérisé en ce que*** la couche extérieure de couverture, lorsque le toit autoporteur (1) du véhicule est monté, fournit des surfaces extérieures dudit toit autoporteur (1) avec un fini de surface permettant au véhicule automobile (2") complètement assemblé de partir immédiatement à la vente après une opération de polissage conventionnelle.
